Europäisches Patentamt

European Patent Office

Office européen des brevets

(19)

(11) **EP 1 610 039 A1**

(12) # DEMANDE DE BREVET EUROPEEN

(43) Date de publication:
**28.12.2005 Bulletin 2005/52**

(51) Int Cl.⁷: **F16H 61/20**

(21) Numéro de dépôt: **05300492.5**

(22) Date de dépôt: **20.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **21.06.2004 FR 0406714**

(71) Demandeur: **Renault**
**92109 Boulogne Billancourt (FR)**

(72) Inventeurs:
- **Turpin, Thomas**
  **F-91400 Orsay (FR)**
- **Vermuse, Vincent**
  **F-91180 St Germain les Arpajon (FR)**

(54) **Procédé et dispositif de commande de boîte de vitesses à changement de rapports automatisé d'un véhicule automobile**

(57)     Procédé de commande de boîte de vitesses à changement de rapport automatisé d'un véhicule automobile, cette boîte de vitesses (4) comportant un convertisseur de couple hydraulique (5) accouplé au moteur du véhicule, une unité de pilotage (1) de la boîte de vitesses et des moyens (8,9) pour débrayer la boîte de vitesses, ce procédé de commande étant caractérisé en ce qu'il consiste à détecter un régime du moteur supérieur à une valeur de seuil prédéterminé et à commander le débrayage de la boîte de vitesses (4), lorsque le véhicule est à l'arrêt, qu'un rapport autre que les positions « Neutre » et « Park » sont engagés, que le conducteur appuie sur la pédale du frein de service, et lorsqu'un régime du moteur supérieur à ladite valeur de seuil est détecté.

FIGURE 1

**Description**

La présente invention concerne un procédé et un dispositif de commande des transmissions automatisées des groupes moto-propulseurs de véhicules automobiles.

Cette invention se rapporte plus particulièrement à un véhicule automobile comportant une boîte de vitesses à changement de rapports automatisée comportant un convertisseur de couple hydraulique, un moteur thermique possédant un boîtier de papillon motorisé, une unité de pilotage du moteur et une unité de pilotage de la boîte de vitesses.

Le boîtier de papillon motorisé est un moteur électrique qui commande l'ouverture et la fermeture du papillon qui règle l'admission de gaz (air ou mélange air - carburant) dans le moteur thermique.

En cas de défaillance du boîtier de papillon motorisé, un mode de fonctionnement dégradé peut occasionner un blocage du régime moteur à une valeur nettement supérieure au régime normal du ralenti.

Dans ce cas, si l'on arrête le véhicule en appuyant le pied sur le frein, le levier de sélection de la boite de vitesses étant engagé dans la position dite « Drive » (mode normal de conduite en marche avant), l'impulseur du convertisseur brasse l'huile dans l'espace compris entre cet impulseur et la turbine du convertisseur. Ce brassage occasionne une montée rapide de la température de l'huile, ce qui est préjudiciable à la bonne tenue mécanique de la boîte de vitesses.

Le but de la présente invention est de remédier aux inconvénients ci-dessus.

Suivant l'invention, le procédé de commande de boîte de vitesses à changement de rapport automatisé d'un véhicule automobile, cette boîte de vitesses comportant un convertisseur de couple hydraulique accouplé au moteur du véhicule, une unité de pilotage de la boîte de vitesses et des moyens pour débrayer la boîte de vitesses, ce procédé étant caractérisé en ce qu'il consiste à détecter un régime du moteur supérieur à une valeur de seuil prédéterminée et à commander le débrayage de la boîte de vitesses, lorsque le véhicule est à l'arrêt, qu'un rapport autre que les positions dites « Neutre » (point mort) et « Park » (parking ou verrouillage) est engagé, que le conducteur appuie sur la pédale du frein de service, et lorsqu'un régime du moteur supérieur à ladite valeur de seuil est détecté.

On évite ainsi tout risque d'échauffement de l'huile du convertisseur de la boîte de vitesses provoqué par un régime de ralenti du moteur trop élevé.

De préférence, dans le cas d'un moteur équipé d'un boîtier de papillon motorisé, le procédé selon l'invention consiste à détecter les états suivants:

a. défaillance du boîtier de papillon motorisé,
b. régime de ralenti du moteur supérieur à un seuil,
c. levier de commande de la boîte de vitesses sur une position autre que la position « Neutre » ou « Park »,
d. vitesse du véhicule inférieure ou égale à un seuil,
e. température de l'huile de la boîte de vitesses supérieure à un seuil,
f. la pédale du frein de service est enfoncée.

A partir de la détection de ces états, différentes situations amènent à commander le débrayage de la boîte de vitesses :

- soit l'unité de pilotage de la boîte de vitesses commande directement le débrayage de la boîte de vitesses lorsque les états a., b., c., d., e., f. sont détectés,

- soit l'unité de pilotage de la boîte de vitesses commande le débrayage de la boîte de vitesses, après écoulement d'une durée prédéterminée de temporisation, lorsque les états a., b., c., d., f. sont détectés et que l'état e. n'est pas détecté, à condition que les états a., b., c., d., f. soient confirmés à l'expiration de la durée de temporisation.

Dans cette deuxième situation, si l'un des états a., b., c., d. ou f. n'est plus détecté pendant l'écoulement de la temporisation, la durée restante de temporisation est à nouveau ladite durée prédéterminée.

Selon un mode de réalisation particulier, le procédé consiste en outre à mémoriser l'occurrence de l'activation du débrayage de la boîte de vitesses. En outre, selon une variante, le procédé consiste en outre à détecter l'arrêt ou le redémarrage du moteur puis à activer le débrayage de la boîte de vitesses si les conditions suivantes sont vérifiées :

- défaillance du boîtier de papillon motorisé,
- température de l'huile de la boîte de vitesses supérieure à un seuil,
- activation de la stratégie de débrayage mémorisée.

Selon un autre mode de réalisation particulier, la procédure de débrayage de la boîte de vitesses est interrompue lorsque l'un au moins des états a., b., c., d., f. n'est plus détecté.

L'invention a également pour objet un dispositif pour la mise en ceuvre du procédé selon l'invention, caractérisé en ce qu'il comprend une unité de pilotage de la boîte de vitesses adaptée pour recevoir des informations représentatives des états a., b., c., d., e., f. et pour piloter lesdits moyens pour débrayer la boîte de vitesses en fonction de ces états.

D'autres particularités et avantages de l'invention apparaîtront encore tout au long de la description ci-après.

Aux dessins annexés, donnés à titre d'exemples non limitatifs:

- la figure 1 est le schéma général du dispositif de commande d'une boîte de vitesses automatisée selon l'invention,

- la figure 2 est un diagramme montrant l'évolution de l'invariant du convertisseur (Y) en fonction du glissement (rapport du régime turbine sur le régime moteur)
- la figure 3 est le schéma de l'algorithme de la stratégie de commande du dispositif selon l'invention, en cas de détection d'un risque de surchauffe du convertisseur.

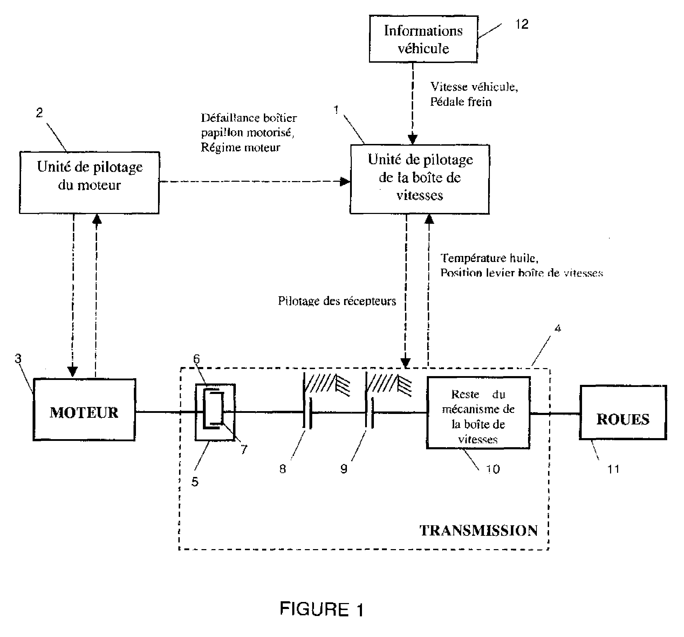

Comme représenté sur la figure 1, le moteur 3 est piloté par une unité de pilotage 2 et la boîte de vitesses 4 est pilotée par une unité de pilotage 1. Chacune de ces deux unités est typiquement intégrée dans un calculateur du véhicule automobile. La boîte de vitesses 4 est composée d'un convertisseur de couple 5, d'au moins deux récepteurs 8 et 9 réalisant un rapport de vitesses et d'éléments mécaniques 10 représentant le reste du mécanisme de la boîte de vitesses. Le convertisseur de couple 5 est un élément de couplage entre le moteur 3 et la boîte de vitesses 4. Il est composé d'un impulseur 6, lié à l'arbre moteur et d'une turbine 7 liée à la boîte de vitesses. En sortie de la boîte de vitesses 4, on retrouve schématiquement les roues du véhicule 11. L'unité de pilotage du moteur 2 peut transmettre à l'unité de pilotage de la boîte de vitesses 1 des informations telles que le régime du moteur ou l'état du boîtier de papillon motorisé c'est à dire une information indiquant si le boîtier papillon motorisé est défaillant ou non. L'unité de pilotage de la boîte de vitesses 1 peut envoyer des ordres de pilotage des récepteurs 8, 9 à la boîte de vitesses 4, elle peut notamment commander l'ouverture ou la fermeture de ceux-ci. Des capteurs situés dans la boîte de vitesses 4 ou provenant d'autres organes du véhicule 12 permettent de renseigner l'unité de pilotage 1 de la boîte de vitesses sur les valeurs de la température de l'huile de la boîte de vitesses, la position du levier de vitesses, la vitesse véhicule ou l'état de la pédale de frein (appuyé ou non). L'unité de pilotage 1 est ainsi adaptée pour recevoir des informations représentatives des états a., b., c., d., e., f. tels qu'énoncés plus haut.

Si l'on considère le cas normal où les deux récepteurs 8 et 9 réalisant le rapport de vitesses sont en prises, lorsque le véhicule est arrêté, le régime de la turbine 7 du convertisseur 5 est nul (la turbine 7 est reliée mécaniquement aux roues 11). L'impulseur 6 du convertisseur qui est entraîné en rotation par le moteur brasse l'huile dans le convertisseur et comme la turbine 7 est bloquée, toute la puissance fournie par le moteur est convertie en énergie thermique.

Nous avons :

$$P_{uissance\_dissipée} = \frac{\omega_{moteur}^3}{Y_{(0)}^2}$$

Avec $Y_{(0)}$ étant l'invariant du convertisseur pour un glissement

$$\frac{\omega_{turbine}}{\omega_{moteur}} = 0$$

Cette puissance dissipée varie à la puissance 3 en fonction du régime moteur ($\omega$ moteur). Lorsque le boîtier de papillon motorisé a une défaillance, il se place mécaniquement dans une position qui a pour conséquence d'imposer un régime moteur élevé, ce qui provoque une augmentation importante de la puissance dissipée dans le convertisseur 5. Cette puissance dissipée étant intégralement transformée en chaleur, la température de l'huile de la boîte de vitesses augmente rapidement.

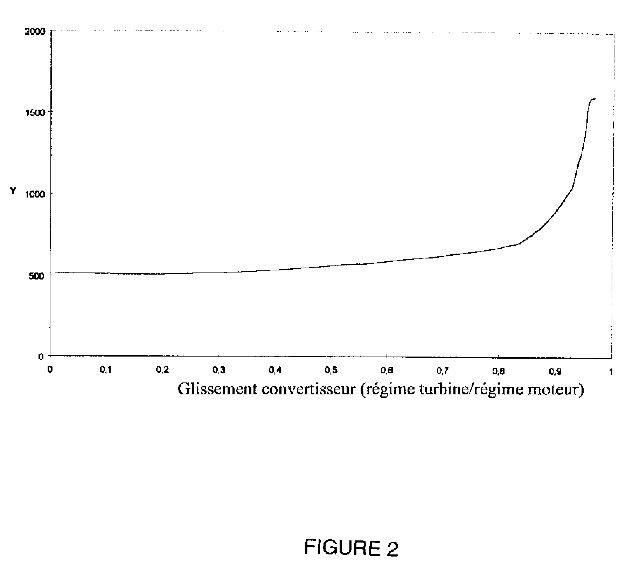

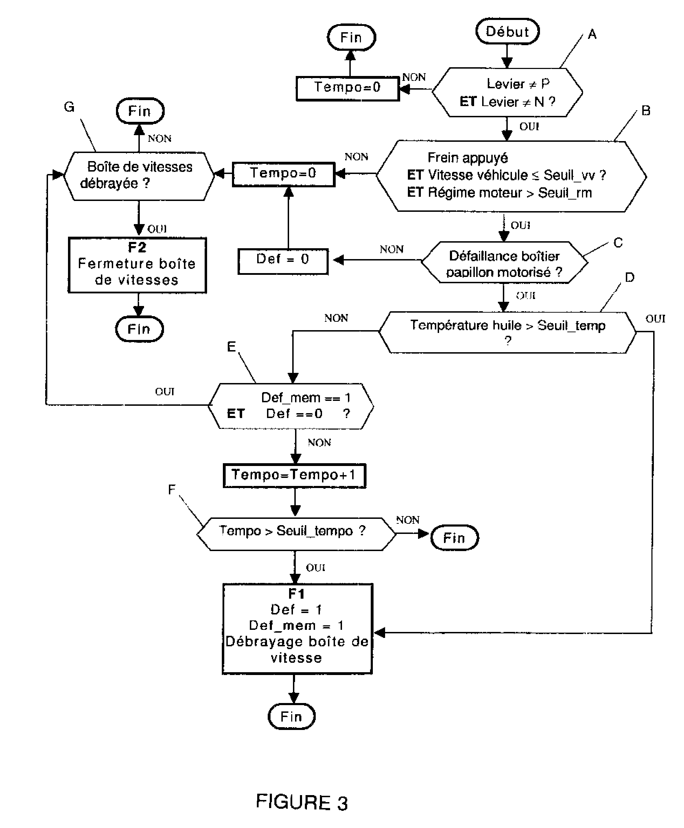

L'invention se propose de résoudre le problème ci-dessus en forçant, dans des conditions précises indiquées dans la description ci-après de la figure 3, l'ouverture d'un des embrayages en prise pour désolidariser la turbine 7 des roues 11 et ainsi ramener la boîte de vitesses sur un rapport équivalent du neutre où seul un embrayage est serré. Dans ces conditions, la turbine 3 est libérée en rotation ce qui permet de changer le point de fonctionnement du convertisseur 4. Le glissement $\frac{\omega_{turbine}}{\omega_{moteur}}$ n'est plus nul et se rapproche de 1, ce qui a pour conséquence d'augmenter la valeur de l'invariant comme montré sur le schéma de la figure 2 et donc de diminuer la puissance dissipée et la température de l'huile de la boîte de vitesses 4.

L'organigramme de la figure 3 décrit à titre d'exemple, les différentes étapes du procédé de commande selon l'invention.

On définit les variables suivantes :

- Levier : correspond à la position du levier de commande de la boîte de vitesses.
  P signifie position « parking » et N signifie position « Neutre » ;
- Def : lorsque cette variable est à 1, un risque de surchauffe du convertisseur est détecté. Cette variable est automatiquement remise à 0 lors de l'arrêt du moteur ;
- Def_mem : Cette variable est mise à 1 en même temps que la variable Def ; elle n'est cependant pas réinitialisée lors de l'arrêt du moteur ; elle permet de mémoriser l'occurrence du risque de surchauffe ;
- Tempo : état d'écoulement de la temporisation utilisée dans le procédé ;
- Seuil_rm : seuil paramétrable de régime moteur;
- Seuil_vv : seuil paramétrable de vitesse véhicule;
- Seuil_temp : seuil paramétrable de température;
- Seuil_tempo : valeur paramétrable de la durée de la temporisation;

Dans l'étape A, l'unité de pilotage 1 teste si le levier de commande de la boîte de vitesses est dans une position différente de la position « Parking » ou « Neutre ». Dans la négative, la variable Tempo est réinitialisée à zéro et l'exécution du procédé se termine. Sinon, le test de l'étape B s'effectue.

Dans l'étape B, l'unité de pilotage 1 teste à partir des différentes informations qu'elle reçoit si le conducteur appuie sur la pédale de frein, si la vitesse du véhicule est inférieure à un seuil paramétrable (Seuil_vv) et si le régime moteur est supérieur à un seuil paramétrable (Seuil_rm). Le seuil de vitesse du véhicule permet de s'assurer que le véhicule est bien à l'arrêt. Le seuil de régime moteur permet de s'assurer que la défaillance du boîtier de papillon motorisé provoque bien une augmentation du régime moteur. Si le test est négatif, la variable Tempo est réinitialisée et le test de l'étape G s'effectue. Sinon, le test de l'étape C s'effectue.

Dans l'étape C, l'unité de pilotage 1 teste à partir des informations qu'elle reçoit de l'unité de pilotage du moteur 2 si le boîtier papillon motorisé est défaillant. Si ce n'est pas le cas, les variables Def et Tempo sont réinitialisées à zéro et le test de l'étape G s'effectue. Si le boîtier de papillon motorisé est défaillant, le test de l'étape D s'effectue.

Dans l'étape D, l'unité de pilotage 1 teste si la température de l'huile de la boîte de vitesses dépasse un seuil (Seuil_temp) paramétrable. Ce seuil est déterminé par des essais ou par l'utilisation d'un modèle thermique approprié. Si ce seuil est dépassé, le processus F1 s'applique : un risque de surchauffe du convertisseur est détecté, les variables Def et Def_mem sont mises à la valeur 1 et l'unité de pilotage 1 commande le débrayage de l'un des deux récepteurs en prise. L'exécution du procédé se termine ensuite. Si le seuil n'est pas dépassé, le test de l'étape E s'effectue.

Dans l'étape E, l'unité de pilotage 1 teste si d'une part un risque de surchauffe du convertisseur a été mémorisé (Def_mem = 1) et si d'autre part aucun risque de surchauffe n'est actuellement en cours (Def = 0). Si ce test est positif, cela signifie qu'un risque de surchauffe a été détecté précédemment, mais que la température de l'huile de la boîte est suffisamment basse pour ne pas avoir besoin de débrayer immédiatement la boîte de vitesses. Le test de l'étape G s'effectue alors. Si le test de l'étape E est négatif, la variable Tempo s'incrémente et le test de l'étape F s'effectue.

Dans l'étape F, l'unité de pilotage 1 teste si la variable Tempo a dépassé un seuil paramétrable (seuil_tempo) correspondant à la durée prédéterminée de la temporisation. Ce seuil peut être déterminé par essai ou par l'utilisation d'un modèle thermique approprié. Si le seuil est dépassé, le processus F1 s'applique: un risque de surchauffe du convertisseur est détecté, les variables Def et Def_mem sont mises à 1 et l'unité de pilotage 1 commande le débrayage de l'un des deux récepteurs en prise. L'exécution du procédé se termine ensuite. Si le seuil n'est pas franchi, l'exécution du procédé se termine.

Enfin dans l'étape G, l'unité de pilotage 1 teste si la boîte de vitesses est débrayée. Si oui, le processus F2 s'applique : l'unité de pilotage 1 commande la fermeture du récepteur débrayé, puis l'exécution du procédé se termine. Si la boîte de vitesses n'est pas débrayée, aucune action n'est effectuée et l'exécution du procédé se termine.

Lorsque le procédé illustré à la figure 3 se termine selon l'une quelconque des situations décrites, on reprend, de préférence de manière périodique, l'exécution du procédé à l'étape A. La valeur de la variable Tempo correspondant à la durée de temporisation restante, est conservée et est utilisée à la reprise du procédé à l'étape A. De cette façon, à chaque exécution du procédé, la temporisation est réinitialisée ou continue de s'écouler jusqu'à atteinte du seuil Seuil_tempo.

Le retour au mode de fonctionnement dit normal s'effectue, selon un mode de réalisation particulier, en fonction de la température de l'huile : si celle-ci est inférieure à un deuxième seuil de température (Seuil_temp_2) on revient au mode de fonctionnement normal, et on réinitialise Def_mem ainsi que la temporisation Temp et la variable Def à zéro. Le procédé décrit par référence à la figure 3 peut alors reprendre à l'étape A. Selon un mode de réalisation particulier, le retour au mode de fonctionnement normal s'effectue seulement si plusieurs des conditions suivantes sont réalisées :

- la température de l'huile est inférieure au seuil Seuil_temp_2,
- il n'y a pas d'état de défaillance du boîtier de papillon motorisé,
- le régime du moteur est inférieur à un seuil prédéterminé,
- la vitesse du véhicule est supérieure à un seuil,
- le levier de vitesse est sur la position « Neutre », ou « Parking »
- la pédale d'accélérateur est appuyée.

Dans le cas contraire, les variables Def_mem, Def et Tempo gardent leur valeur courante et le procédé décrit reprend à l'étape A.

Selon un mode de réalisation particulier, l'unité de pilotage de la boîte de vitesses est adaptée pour détecter l'arrêt du moteur et le redémarrage de celui-ci et détecter l'absence ou la présence du défaut a.

Dans ce cas:

- en l'absence du défaut a., l'interruption de la procédure de commande du débrayage de la boîte de vitesses est commandée par l'unité de pilotage de la boîte de vitesses,
- en présence du défaut a., le débrayage de la boîte de vitesses est activé après vérification que le défaut e. est toujours présent.

Selon un autre mode de réalisation particulier, après arrêt et redémarrage du moteur, l'unité de pilotage de la boîte de vitesses commande l'interruption de la procédure de débrayage de la boîte de vitesses si l'une des conditions suivantes n'est pas réalisée :

- défaillance du boîtier de papillon motorisé,
- variable Def_mem à 1,
- température de l'huile supérieure à un troisième seuil (Seuil_temp_3).

Si toutes ces conditions sont réalisées on effectue, comme à l'étape F1, l'activation du débrayage de la boîte de vitesses et on met la variable Def à 1.

## Revendications

1. Procédé de commande de boîte de vitesses à changement de rapport automatisé d'un véhicule automobile, cette boîte de vitesses (4) comportant un convertisseur de couple hydraulique (5) accouplé au moteur du véhicule, une unité de pilotage (1) de la boîte de vitesses et des moyens (8,9) pour débrayer la boîte de vitesses, ce procédé de commande étant **caractérisé en ce qu'**il consiste à détecter un régime du moteur supérieur à une valeur de seuil prédéterminé et à commander le débrayage de la boîte de vitesses, lorsque le véhicule est à l'arrêt, qu'un rapport autre que les positions « Neutre » et « Park » est engagé, que le conducteur appuie sur la pédale du frein de service, et lorsqu'un régime du moteur supérieur à ladite valeur de seuil est détecté.

2. Procédé selon la revendication 1, le moteur comportant un boîtier de papillon motorisé **caractérisé en ce qu'**il consiste à détecter les états suivants :

   a. défaillance du boîtier de papillon motorisé,
   b. régime de ralenti du moteur supérieur à un seuil,
   c. levier de commande de la boîte de vitesses sur une position autre que la position « Neutre » ou « Park »,
   d. vitesse du véhicule inférieure ou égale à un seuil,
   e. température de l'huile de la boîte de vitesses supérieure à un seuil,
   f. pédale du frein de service appuyée.

3. Procédé selon la revendication 2, **caractérisé en ce que** l'unité de pilotage de la boîte de vitesses commande directement le débrayage de la boîte de vitesses (4) lorsque les états a., b., c., d., e., f. sont détectés.

4. Procédé selon la revendication 2, **caractérisé en ce que** l'unité de pilotage de la boîte de vitesses commande le débrayage de la boîte de vitesses (4), après écoulement d'une durée prédéterminée de temporisation, lorsque les états a., b., c., d., f. sont détectés et que l'état e. n'est pas détecté, à condition que les états a., b., c., d., f. soient confirmés à l'expiration de la durée de temporisation.

5. Procédé selon la revendication 4, **caractérisé en ce que** si l'un des états a., b., c., d. ou f. n'est plus détecté pendant l'écoulement de la temporisation, la durée restante de temporisation est à nouveau ladite durée prédéterminée.

6. Procédé selon l'une des revendications 1 à 5, **caractérisé en ce qu'**il consiste en outre à détecter l'arrêt du moteur et le redémarrage de celui-ci, puis à détecter l'absence ou la présence du défaut a, en l'absence du défaut a. la procédure de commande de débrayage de la boîte de vitesses (4) étant interrompue, en présence du défaut a. le débrayage de la boîte de vitesses (4) étant activé après vérification que le défaut e. est toujours présent.

7. Procédé selon l'une des revendications 1 à 5, **caractérisé en ce qu'**il consiste en outre à mémoriser (Def_mem) l'occurrence de l'activation du débrayage de la boîte de vitesses.

8. Procédé selon la revendication 7, **caractérisé en ce qu'**il consiste en outre à détecter l'arrêt ou le redémarrage du moteur puis à activer le débrayage de la boîte de vitesses si les conditions suivantes sont vérifiées :

   - défaillance du boîtier de papillon motorisé,
   - température de l'huile de la boîte de vitesses supérieure à un seuil,
   - activation de la stratégie de débrayage mémorisée (Def_mem).

9. Procédé selon l'une des revendications 2 à 8, **caractérisé en ce que** l'unité de pilotage de la boîte de vitesses interrompt la procédure de débrayage de la boîte de vitesses (4) lorsque l'un au moins des états a., b., c., d., f. n'est plus détecté.

10. Dispositif pour la mise en oeuvre du procédé selon l'une des revendications 2 à 9, **caractérisé en ce qu'**il comprend une unité de pilotage de la boîte de vitesses (1) adaptée pour recevoir des informations représentatives des états a., b., c., d., e., f. et pour piloter lesdits moyens (8,9) pour débrayer la boîte de vitesses en fonction de ces états.

FIGURE 1

FIGURE 2

Début

A

Levier ≠ P
ET Levier ≠ N ?

NON

Tempo=0

Fin

OUI

B

Frein appuyé
ET Vitesse véhicule ≤ Seuil_vv ?
ET Régime moteur > Seuil_rm

NON

Tempo=0

OUI

G

Boîte de vitesses
débrayée ?

NON

Fin

OUI

F2
Fermeture boîte
de vitesses

Fin

Def = 0

NON

C

Défaillance boîtier
papillon motorisé ?

OUI

D

Température huile > Seuil_temp
?

NON

OUI

E

Def_mem == 1
ET    Def ==0    ?

OUI

NON

Tempo=Tempo+1

F

Tempo > Seuil_tempo ?

NON

Fin

OUI

F1
Def = 1
Def_mem = 1
Débrayage boîte de
vitesse

Fin

FIGURE 3

**EP 1 610 039 A1**

**Office européen
des brevets**

**RAPPORT DE RECHERCHE EUROPEENNE**

Numéro de la demande

EP 05 30 0492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 955 255 A (ARAI YOSHIMITSU ET AL) 11 septembre 1990 (1990-09-11) | 1 | F16H61/20 |
| A | * le document en entier * | 2-10 | |
| A | US 4 166 442 A (HENDERSON HENNING M ET AL) 4 septembre 1979 (1979-09-04) * abrégé; figures 3,7 * * colonne 3, ligne 42 - colonne 4, ligne 2 * | 1-10 | |
| A | US 5 119 694 A (SATO YOICHI ET AL) 9 juin 1992 (1992-06-09) * abrégé; figures 1-3 * | 1 | |

**DOMAINES TECHNIQUES RECHERCHES (Int.Cl.7)**

F16H
B60K

Le présent rapport a été établi pour toutes les revendications

| Lieu de la recherche | Date d'achèvement de la recherche | Examinateur |
|---|---|---|
| Munich | 16 septembre 2005 | Daieff, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

9

**ANNEXE AU RAPPORT DE RECHERCHE EUROPEENNE
RELATIF A LA DEMANDE DE BREVET EUROPEEN NO.**

EP 05 30 0492

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2005

| Document brevet cité au rapport de recherche | | Date de publication | Membre(s) de la famille de brevet(s) | | Date de publication |
|---|---|---|---|---|---|
| US 4955255 | A | 11-09-1990 | DE | 3842108 A1 | 06-07-1989 |
| | | | GB | 2211902 A | 12-07-1989 |
| | | | JP | 1094135 U | 21-06-1989 |
| | | | JP | 5045534 Y2 | 22-11-1993 |
| US 4166442 | A | 04-09-1979 | BR | 7702961 A | 21-03-1978 |
| | | | CA | 1089955 A1 | 18-11-1980 |
| | | | DE | 2720485 A1 | 24-11-1977 |
| | | | GB | 1582555 A | 14-01-1981 |
| | | | JP | 52145624 A | 03-12-1977 |
| US 5119694 | A | 09-06-1992 | DE | 4118474 A1 | 02-01-1992 |
| | | | GB | 2245940 A | 15-01-1992 |
| | | | JP | 4054374 A | 21-02-1992 |

EPO FORM P0480

Pour tout renseignement concernant cette annexe : voir Journal Officiel de l'Office européen des brevets, No.12/82